# EUROPEAN PATENT APPLICATION

(11) **EP 2 428 869 A1**
(43) Date of publication of application: **14.03.2012**
(21) Application number: 11006649.5
(22) Date of filing: 12.08.2011
(51) Int. Cl.: G06F 3/01, G06F 3/033

(54) **Control of mobile communication device based on head movement**

(30) Priority: 13.09.2010 US 880251
(71) Applicant: Sony Ericsson Mobile Communications AB, 221 88 Lund (SE)
(72) Inventor: Agevik, Markus, 21230 Malmö (SE); Ahlgren, Erik, 24231 Hörby (SE)
(74) Representative: Banzer, Hans-Jörg

(57) **Abstract**

A user controls a function of a mobile terminal (100) with the aid of a motion sensor (270) integrated in a headset (200). The motion sensor (270) in the headset (200) detects movement of the user's head and transmits head movement signals to the mobile terminal (100). The mobile terminal (100) uses the head movement signals received from the headset (200) to control a function of the mobile terminal (100). For example, the mobile terminal (100) may lock or unlock the mobile terminal (100) based on the user's head movement. The mobile terminal (100) may also accept, decline, initiate, or terminate a call based on the user's head movement. Head movement may also be used to navigate desktop icons and menus to perform tasks such as starting programs and selecting music for play back.

## Description

### BACKGROUND

The present invention relates generally to headsets for mobile terminals and, more particularly to headset with integrated motion sensors for controlling a mobile terminals by means of head movements.

Headsets are often used with a mobile terminal or other mobile communication device to enable a user to engage in conversation while both keeping both hands free for other tasks. While listening and talking with a headset does not require hands, many operations such as initiating a call, answering a call, rejecting a call, and locking/unlocking the mobile terminal require the use of hands. The need to use hands to perform a control function may be inconvenient in some circumstances (e.g. when both hands are occupied) or, sometimes, even dangerous (e.g. while driving a car in dense traffic). Accordingly, it would be useful to provide a hands-free control functionality for common control functions.

### SUMMARY

According to the present invention, a method of hands-free control of a mobile terminal as defined in claim 1 and a communication device as defined in claim 9 are provided. The dependent claims define preferred embodiments of the invention. The present invention provides a method and apparatus for controlling a function of the mobile terminal with the aid of a motion sensor integrated with a headset. A headset sensor detects movement of the user's head and transmits head movement signals to the mobile terminal based on the detected head movement. The mobile terminal uses the head movement signals received from the headset to control a function of the mobile terminal. For example, the mobile terminal may lock or unlock the mobile terminal based on the user's head movement. The mobile terminal may also accept, decline, initiate, or terminate a call based on the user's head movement. Head movement may also be used to navigate desktop icons and menus to perform tasks such as starting programs and selecting music for play back.

One exemplary embodiment of the invention comprises a method of hands-free control of a mobile terminal. The method comprises detecting a predetermined movement of said mobile terminal; detecting a user head movement; and controlling a function of said mobile terminal based on said predetermined movement of said mobile terminal and the user head movement.

In some embodiments of the method, controlling a function of said mobile terminal based on said predetermined movement of said mobile terminal and the user head movement comprises detecting that a mobile terminal is in a reading position based on detected movement of the mobile terminal; and detecting a predetermined head movement while said mobile terminal is in the reading position; and performing a control function based on said predetermined head movement while the mobile terminal is in the reading position.

In some embodiments, the method further comprises activating detection of user head movement responsive to a predetermined event.

In some embodiments of the method, controlling a function of said mobile terminal based on said predetermined movement of said mobile terminal and the user head movement comprises comparing the detected head movement to one or more predetermined head movement patterns stored in memory; and performing a control function based on matching said predetermined head movement with a recognized head movement pattern stored in memory.

In some embodiments of the method, the head movement patterns comprise at least one user-defined head movement pattern.

In some embodiments, the method further comprises recording a head movement in a record mode to generate the user-defined head movement pattern.

In some embodiments of the method, controlling a function of said mobile terminal comprises locking or unlocking said mobile terminal.

In some embodiments of the method, controlling a function of said mobile terminal comprises accepting or declining an incoming call.

Another embodiment of the invention comprises a mobile communication device. The mobile communication device comprises a mobile terminal, a first motion sensor disposed on said mobile terminal to detect a predetermined movement of said mobile terminal; a headset adapted to be paired with said mobile terminal; a second motion sensor disposed on said headset for detecting head movement; and a control processor configured to control a function of said mobile terminal based on the movement of the mobile terminal and the detected head movement.

In some embodiments of the mobile communication device, the control processor is configured to control a function of said mobile terminal by detecting that a mobile terminal is in a reading position based on detected movement of the mobile terminal; detecting a predetermined head movement while said mobile terminal is in the reading position; performing a control function based on said predetermined head movement.

In some embodiments of the mobile communication device, the control processor is configured to activate the second motion sensor in said headset to enable detection of user head movement responsive to a predetermined event.

In some embodiments of the mobile communication device, the control processor is configured to control a function of said mobile terminal by comparing the detected head movement to one or more predetermined head movement patterns stored in memory; and performing a control function based on matching said predetermined head movement with a recognized head movement pattern stored in memory.

In some embodiments of the mobile communication device, the head movement patterns comprise at least one user-defined head movement pattern.

In some embodiments of the mobile communication device, the control processor is configured to record a head movement in a record mode to generate the user-defined head movement pattern.

In some embodiments of the mobile communication device, the control processor is configured to lock or unlock said mobile communication device based on the detected movement of said mobile terminal and the detected head movement.

In some embodiments of the mobile communication device, the control processor is configured to accept or decline an incoming call based on the detected movement of said mobile terminal and the detected head movement.

### BRIEF DESCRIPTION OF THE DRAWINGS

Figure 1 is a perspective view of a wireless communication device communicating with a headset according to one embodiment of the present invention.

Figure 2 is a block diagram illustrating come of the component parts of a headset communicating with a wireless communication device configured according to one embodiment of the present invention.

Figure 3 illustrates an exemplary control method based on a combination of mobile terminal movement and head movement.

Figure 4 is an exemplary method of recording a user head movement pattern.

### DETAILED DESCRIPTION

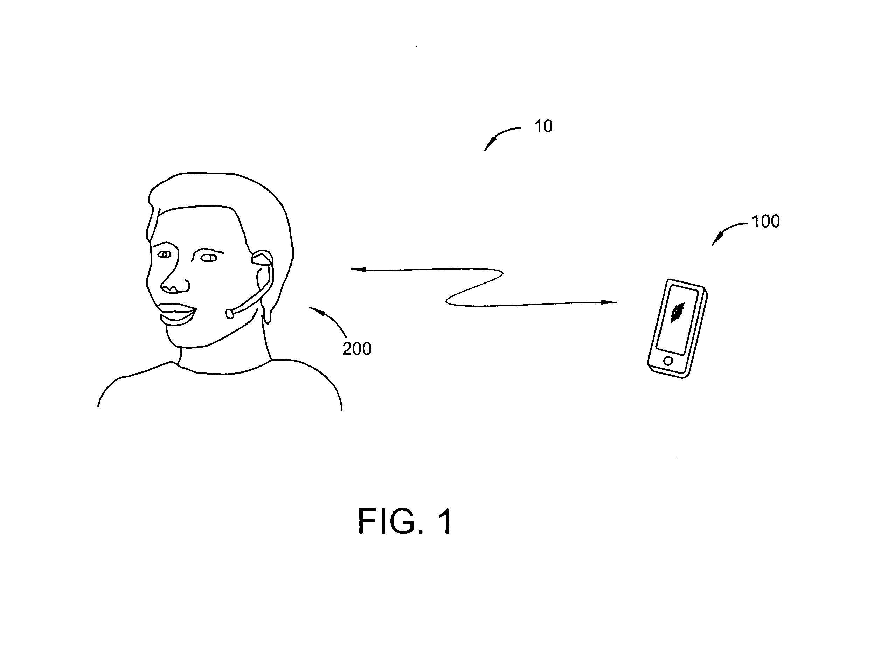

FIG. 1 illustrates a first exemplary embodiment of the mobile communication device 10 of the present invention which may be used for hands-free communication. The mobile communication device 10 comprises two main parts: a mobile terminal 100 and a headset 200. The mobile terminal 100 and headset 200 are preferably configured as separate wirelessly connected units. However, the headset 200 may be connected by a wire to the mobile terminal 100 in some embodiments. In the exemplary embodiment shown in Fig. 1, the mobile terminal 100 comprises a cellular phone. In other embodiments, the mobile terminal 100 may comprise a smart mobile terminal, satellite phone, Personal Digital Assistant (PDA), laptop computer, notebook computer, or other device with wireless communications capabilities.

Mobile terminal 100 and headset 200 communicate with each over a wireless communication link using, for example, BLUETOOTH technology or other short-range wireless communication technology. Initially, the mobile terminal 100 and headset 200 execute a procedure to pair with each other and establish a short-range communication link. That procedure is well-known to those of ordinary skill in the art and not germane to the present invention. Therefore, it is not discussed in detail herein. When the headset 200 is paired with the mobile terminal 100, the headset 200 may exchange audio and/or control signals with the mobile terminal via the wireless link.

While the wireless headset 200 enables a user to engage in a hands-free voice conversation, some functions still require the use of one or both of the user's hands. For example, it usually takes two hands to unlock the mobile terminal: one to hold the mobile terminal and one to press the keys.

One aspect of the present invention comprises controlling a function of the mobile terminal 100 with the aid of a motion sensor integrated with the headset 200. A sensor in the headset 200 detects movement of the user's head and transmits head movement signals or control signals to the mobile terminal 200 based on the detected head movement. The mobile terminal 100 uses the head movement signals or control signals received from the headset 200 to control a function of the mobile terminal 100. For example, the mobile terminal 100 may lock or unlock the mobile terminal 100 based on the user's head movement. The mobile terminal 100 may also accept, decline, initiate, or terminate a call based on the user's head movement. Head movement may also be used to navigate desktop icons and menus to perform tasks such as starting programs and selecting music for play back.

In another aspect of the present invention, the mobile terminal 100 also includes a motion sensor and generates control signals based on the movement of the mobile terminal. The mobile terminal 100 jointly processes the head movement signals from the headset 200 with movement signals from a second sensor in the mobile terminal 100 to control a function of the mobile terminal 100. For example, the mobile terminal 100 may determine when a user is looking at the mobile terminal 100 based on signals from the motion sensors. When the user is looking at the mobile terminal 100, the control processor in the mobile terminal 100 may perform a predetermined function depending on the user's head movement. For example, the user may move his/her head in a predetermined pattern to unlock the mobile terminal 100. When the mobile terminal 100 is unlocked, a second predetermined movement can be used to accept or decline a call. Other control sequences can also be defined based on input from the two sensors.

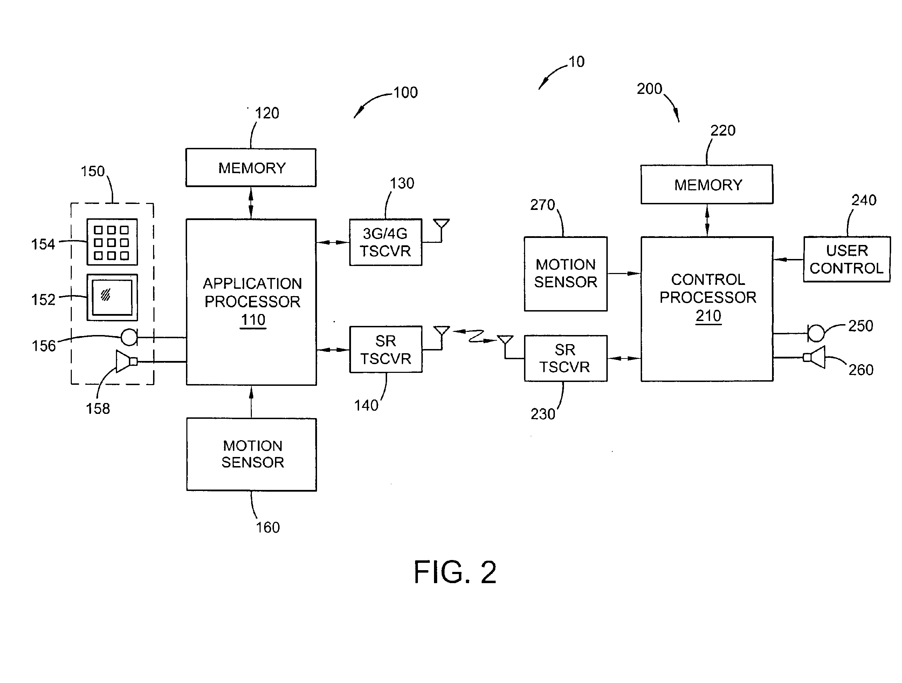

Figure 2 is a block diagram illustrating the component parts of a mobile terminal 100 and a headset 200 configured according to one embodiment of the present invention. The mobile terminal 100 comprises an application processor 110, a memory 120, a wireless transceiver 130, a short-range transceiver 140, and a user interface 150. Controller 110 comprises one or more general purpose or special purpose microprocessors that control the operation and functions of the mobile terminal 100 in accordance with program instructions and data stored in memory 120. Memory 120 includes both random access memory (RAM) and read-only memory (ROM) for storing program instructions and data required for controlling the operation of mobile terminal 100 as described herein.

The wireless transceiver 130 may comprise a fully functional cellular transceiver for transmitting signals to and receiving signals from a base station or other access node in a wireless communications network. The cellular transceiver 130 may implement any one of a variety of communication standards including, but not limited to, the standards known as the Global System for Mobile Communications (GSM), General Packet Radio Service (GPRS), Universal Mobile Telecommunication System (UMTS), Wideband CDMA (W-CDMA), and Long-Term Evolution (LTE). The wireless transceiver may also comprise a wireless local area network (WLAN) transceiver, such as a WiFi transceiver. Short-range wireless transceiver 140 enables the mobile terminal 100 to exchange audio and/or control signals with the headset 200. The short-range wireless transceiver may operate according to the BLUETOOTH protocol or other short-range wireless protocol.

The user interface 150 enables a user to interact with and control the mobile terminal 100. Typically, the user interface 150 includes a display 152 (e.g., an LCD or touch-sensitive display) to display information for viewing by the user, one or more user input devices 154 to receive input from a user, a microphone 156, and speaker 158. The user input devices 154 may, for example comprise a keypad, one or more function keys, navigation controls, and/or touch pad. In one embodiment, the mobile terminal 100 may include a touch screen display that also functions as a user input device 154. The microphone terminal 156 detects audible sounds, such as the user's voice, and converts the audible sounds to electrical audio signals for input to the application processor. Speaker 158 converts electrical audio signals output by the application processor into audible sounds that can be heard by the user.

The mobile terminal 100 also includes a motion sensor 160 to detect movement of the mobile terminal 100. The motion sensor 160 may, for example comprise a single accelerometer that detects acceleration of the mobile terminal 100. In some embodiments, multiple sensors 160 detecting movement about different axes may be used to detect movement or position of the mobile terminal 100. Mechanical or liquid-based switches where movement causes an electrical connection to be established between contact pairs can also be used to detect movement of the mobile terminal 100.

The headset 200 comprises a control processor 210, memory 220, a short-range transceiver 230, user controls 240, a microphone 250, and a speaker 260. The control processor 210 comprises one or more processors for controlling the operation of the headset 200 as herein described according to programs instructions stored in memory 220. Memory 220 comprises both RAM and ROM for storing program instructions and data needed for operation. The user controls 240 may comprise one or more buttons to allow basic functions to be performed by the user, such as turning the headset power on and off, answering calls, and terminating calls. The short-range transceiver 230 comprises, for example, a BLUETOOTH transceiver that exchanges audio and control signals with the mobile terminal 100 over a wireless communication link. The microphone 250 converts the user's speech into audio signal, which are transmitted to the mobile terminal 100 via the short-range transceiver 230. The speaker 260 converts audio signals received from the mobile terminal 100 into audible sounds that can be heard by the user.

According to the present invention, the headset 200 also includes a motion sensor 270 for detecting a user's head movements. The motion sensor 270 may, for example comprise an accelerometer that detects acceleration of the headset 200. In some embodiments, multiple sensors 270 detecting movement about different axes may be used to detect movement or position of the headset 200. Mechanical or liquid-based switches where movement causes an electrical connection to be established between contact pairs can also be used to detect movement of the headset 200.

While a headset 200 allows a user to engage in a conversation without the need to holding the mobile terminal 100, the use of hands is still required for many common operations. For example, the user's hands may be required to make or answer a call, and to lock or unlock the mobile terminal 100. The present invention provides a method and apparatus for hands-free control of the mobile terminal 100 based on various combinations of head movement and mobile terminal movement. Thus, the present invention enables many common operations to be performed without the use of hands.

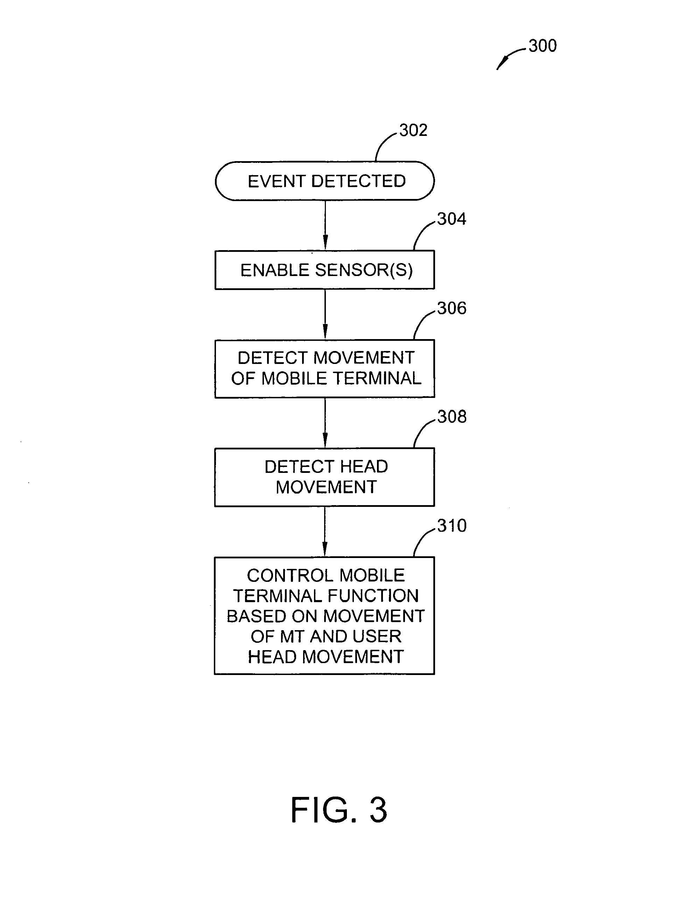

Figure 3 illustrates one exemplary method 300 of controlling a function of the mobile terminal 100 based on a combination of head movement and mobile terminal movement. In this embodiment, it is presumed that the headset sensor 270, the mobile terminal sensor 160, or both are disabled to save battery power. When a predetermined event occurs (block 302), the application processor 110 in the mobile terminal 100 enables the headset sensor 270, the mobile terminal sensor 160, or both (block 304). This step can be omitted in embodiments where the sensors 160, 270 are turned on continuously. When the sensors 160, 270 are enabled, the mobile terminal sensor 160 detects movement of the mobile terminal 100 and generates signals for input to the application processor 110 (block 306). The headset sensor 270 similarly detects the user's head movement and generates head movement signals which are transmitted to the mobile terminal 100 via the short-range interface 230 (block 308). The application processor 110 in the mobile terminal 100 determines an appropriate action to take based on both the movement of the mobile terminal 100 and the user's head movement (block 310). For example, the mobile terminal 100 may lock or unlock the mobile terminal 100, answer or decline a call, and initiate/terminate a call depending on the movement of the mobile terminal 100 and headset 200. The application processor 110 may also enable the user to navigate desktop icons and menus to perform almost any function.

In some embodiments of the invention, the raw sensor data from the headset sensor 270 can be transmitted to the mobile terminal 100 as head movement data and processed at the mobile terminal 100 to generate control signals indicative of particular head movements. In other embodiments, the raw sensor data from the headset sensor 270 can be pre-processed by the control processor 210 in the headset to generate predetermined head movement signals indicative of a particular head movement, which may be transmitted to the mobile terminal 100. For example, the control circuit 210 may generate a predetermined head movement signal to indicate a vertical headshake, a horizontal headshake, or a head rotation. A head movement signal may also be generated to indicate a sequence of head movements, such as a head nod followed by a head rotation.

The mobile terminal 100 may associate particular combinations of mobile terminal movement and head movement with specific control functions. Exemplary control functions include locking/unlocking the mobile terminal 100, accepting/ declining an incoming call, initiating/terminating a call, and holding/resuming a call. A given combinations of mobile terminal movement and head movement may be associated with more than one mobile terminal function depending on the current mode or status of the mobile terminal 100.

Recognition of head movement is based on comparison of the detected head movement to head movement patterns stored in memory 120 of the mobile terminal 100. The head movement patterns stored in memory 120 are associated with predetermined mobile terminal functions depending on the current state of the mobile terminal 100. The associated control functions for different head movement patterns may be predefined by the manufacturer or user-defined based on user preference settings.

In some embodiments, the control processor 210 in the headset 200 could be programmed to recognize head movements and generate predefined head movement signals for transmission. Memory 220 in the headset 200 may store the head movement patterns. In this case, the mapping of particular head movements to control signals may still be performed by the application processor 110 in the mobile terminal 100. In other embodiments, the control processor in the headset 200 may be programmed to recognition head movement and map the head movements to predefined control signals which are transmitted to the mobile terminal 100.

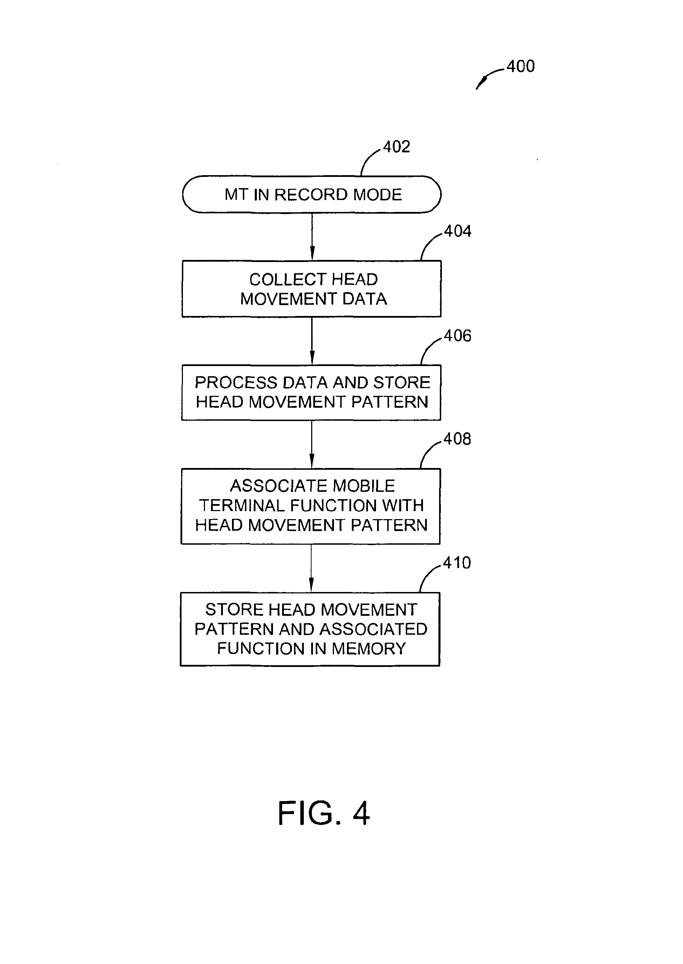

In some embodiments, the user may record a particular head movement pattern to be saved in memory 120, 220 and associate the recorded head movement pattern with a mobile terminal function. Figure 4 illustrates an exemplary method 400 of defining a head movement pattern. The procedure begins when the user places the mobile terminal 100 in a record mode (block 402). The user may place the mobile terminal 100 in a record mode via the user interface 160. When the mobile terminal 100 is in the record mode, it commands the headset 200 to detect the user's head movement (block 404). The recorded head movements may be subject to predetermined limits. When the recording ends, the head movement data is processed and stored as a head movement pattern. For example, the application processor 110 in the mobile terminal 100 may extract the most important characteristics of the recorded head movement and store the characteristics as a head movement pattern. The user may then be prompted to select a corresponding function to associate with the head movement pattern. When the user selects a control function, the head movement pattern is stored in memory and the procedure ends.

The following use case scenario illustrates how mobile terminal movement and head movement may be used in combination to control a mobile terminal 100. A user is walking while carrying a bag, so the user has one-hand available. When an incoming call is received, the mobile terminal 100 begins to ring. The user lifts the mobile terminal 100 to a reading position to see the number of the calling party. The motion detector 160 detects that the mobile terminal 160 is raised. In some embodiments, the headset sensor 270 may also detect the user tilting his/her head down to read the caller ID number. After viewing the caller ID number, the user nods his/her head vertically to accept the call. The motion sensor 270 in the headset 200 detects the user's head movement. The user could alternatively shake his/her head horizontally to decline the call. Based on the detected movement of the mobile terminal 100 and the user's head movement, the control circuit 110 in the mobile terminal 100 either accepts or declines the call.

To continue the example, a second incoming call is received before the first call ends. A predefined head movement (e.g., vertical head nod) could be used to put the first call on hold and answer the second call. When the second call ends, another predefined head movement (e.g., head shake) can be used to resume the first call. When the first call ends, a predefined head movement (e.g. head shake) may be used to lock the mobile terminal 100.

In another use case scenario, a user is walking while carrying a bag in one hand. The user decides to make a call to a friend and raises the mobile terminal 100 to a reading position. The mobile terminal sensor 160 detects that the mobile terminal 100 is in the reading position. With the mobile terminal 100 in the reading position, the user nods his/her head to unlock the mobile terminal 100 a bring up a list of contacts (e.g. the favorites list). Additional head movements are used to scroll through the list of contacts and a final head nod is used to select the currently highlighted contact. The sensor 270 in the headset 200 detects the user's head movement and sends control signals (sensor data or pre-processed control signals) to the mobile terminal 100.

The above examples illustrate how certain predetermined head movements may be used for different control functions based on the current state or status of the mobile terminal 100. In the first example, a vertical head nod is used to accept the first call and to place the first call on hold. A headshake is used to decline a call, to resume the first call when the second call ends, and to lock the mobile terminal when a call ends. In the second example, a head nod is used to unlock the mobile terminal 100 and bring up a list of contacts to allow the user to initiate a call.

Using a combination of head movement and mobile terminal movement helps avoid unintentional triggering of mobile terminal functions. A user is likely to move his/her head for many reasons that have nothing to do with mobile terminal operation. However, an intention to control the mobile terminal 100 can be inferred when the mobile terminal 100 is held in a reading position and a head movement is detected with the mobile terminal 100 in the reading position. Thus, analysis of the mobile terminal position in combination with the user's head movement provides a more reliable control mechanism than head movement alone.

The present invention may, of course, be carried out in other specific ways than those herein set forth without departing from the scope and essential characteristics of the invention. The present embodiments are, therefore, to be considered in all respects as illustrative and not restrictive, and all changes coming within the meaning and equivalency range of the appended claims are intended to be embraced therein.

## Claims

1. A method of hands-free control of a mobile terminal (100), the method comprising:
detecting a predetermined movement of said mobile terminal (100);
detecting a user head movement; and
controlling a function of said mobile terminal (100) based on said predetermined movement of said mobile terminal (100) and the user head movement.

2. The method of claim 1 wherein controlling a function of said mobile terminal (100) based on said predetermined movement of said mobile terminal (100) and the user head movement comprises:
detecting that a mobile terminal (100) is in a reading position based on the detected movement of the mobile terminal (100); and
detecting a predetermined head movement while said mobile terminal (100) is in a reading position; and
performing a control function based on said predetermined head movement while the mobile terminal (100) is in the reading position.

3. The method of claim 1 or claim 2 further comprising activating the detection of the user head movement responsive to a predetermined event.

4. The method of anyone of claims 1-3 wherein controlling a function of said mobile terminal (100) based on said predetermined movement of said mobile terminal (100) and the user head movement comprises:
comparing the detected head movement to one or more predetermined head movement patterns stored in a memory (120, 220); and
performing a control function based on matching said predetermined head movement with a recognized head movement pattern stored in the memory (120, 220).

5. The method of claim 4 wherein said head movement patterns comprise at least one user-defined head movement pattern.

6. The method of claim 5 further comprising recording a head movement in a record mode to generate the user-defined head movement pattern.

7. The method of anyone of claims 1-6 wherein controlling a function of said mobile terminal (100) comprises locking or unlocking said mobile terminal (100).

8. The method of anyone of claims 1-7 wherein controlling a function of said mobile terminal (100) comprises accepting or declining an incoming call.

9. A communication device (10) comprising:
a mobile terminal (100);
a first motion sensor (160) disposed on said mobile terminal (100) to detect a predetermined movement of said mobile terminal (100);
a headset (200) adapted to be paired with said mobile terminal (100);
a second motion sensor (270) disposed on said headset (200) for detecting a head movement;
a control processor (110, 210) configured to control a function of said mobile terminal (100) based on the movement of the mobile terminal (100) and the detected head movement.

10. The communication device (10) of claim 9 wherein the control processor (110, 210) is configured to control a function of said mobile terminal (100) by:
detecting that the mobile terminal (100) is in a reading position based on the detected movement of the mobile terminal (100); and
detecting a predetermined head movement while said mobile terminal (100) is in the reading position; and
performing a control function based on said predetermined head movement.

11. The communication device (10) of claim 9 or claim 10 wherein the control processor (110, 210) is configured to activate the second motion sensor (270) in said headset (200) to enable the detection of head movement responsive to a predetermined event.

12. The communication device (10) of anyone of claims 9-11 wherein the control processor (110, 210) is configured to control a function of said mobile terminal (100) by:
comparing the detected head movement to one or more predetermined head movement patterns stored in a memory (120, 220); and
performing a control function based on matching said predetermined head movement with a recognized head movement pattern stored in the memory (120, 220).

13. The communication device (10) of claim 12 wherein said head movement patterns comprise at least one user-defined head movement pattern, and wherein the control processor (110, 210) is configured to record a head movement in a record mode to generate the user-defined head movement pattern.

14. The communication device of anyone of claims 9-13 wherein the control processor (110, 210) is configured to lock or unlock said mobile communication device (10) based on the detected movement of said mobile terminal (100) and the detected head movement.

15. The communication device (10) of anyone of claims 9-14 wherein the control processor (110, 210) is configured to accept or decline an incoming call based on the detected movement of said mobile terminal (100) and the detected head movement.
